**Europäisches Patentamt**

**European Patent Office**

**Office européen des brevets**

(11) Numéro de publication : **0 348 298 B1**

(12) **FASCICULE DE BREVET EUROPEEN**

(45) Date de publication du fascicule du brevet :
**24.03.93 Bulletin 93/12**

(21) Numéro de dépôt : **89401751.6**

(22) Date de dépôt : **21.06.89**

(51) Int. Cl.⁵ : **A47J 27/62,** A47J 27/00, F24C 15/10

(54) **Procédé de régulation thermique d'un appareil chauffant, dispositif pour sa mise en oeuvre et appareil chauffant comportant ce dispositif.**

(30) Priorité : **22.06.88 FR 8808379**

(43) Date de publication de la demande :
**27.12.89 Bulletin 89/52**

(45) Mention de la délivrance du brevet :
**24.03.93 Bulletin 93/12**

(84) Etats contractants désignés :
**BE CH DE ES GB IT LI LU NL**

(56) Documents cités :
**EP-A- 0 074 108**
**WO-A-87/04815**
**CH-A- 444 417**

(73) Titulaire : **SEB S.A. (Société Anonyme Française)**
**F-21260 Selongey (FR)**

(72) Inventeur : **Duborper, Alain**
**Beausoleil Sales**
**F-74150 Rumilly (FR)**
Inventeur : **Rivier, Paul**
**Les Mésanges Route de Lornay**
**F-74150 Rumilly (FR)**
Inventeur : **Miquelot, Gilles**
**3 Avenue Edouard André**
**F-74150 Rumilly (FR)**
Inventeur : **Rosset, Roger**
**Aux Marnaz Balve Bloye**
**F-74150 Rumilly (FR)**

(74) Mandataire : **Bouju, André**
**Cabinet Bouju Derambure (Bugnion) S.A. B.P. 6250**
**F-75818 Paris Cédex 17 (FR)**

EP 0 348 298 B1

Jouve, 18, rue Saint-Denis, 75001 PARIS

## Description

La présente invention concerne un procédé de régulation thermique d'un appareil chauffant.

L'invention vise également un dispositif pour la mise en oeuvre du procédé de régulation thermique précité, ainsi que l'appareil chauffant comportant ce dispositif.

L'appareil chauffant peut être un récipient culinaire tel que casserole, faitout, sauteuse ou analogue.

Cet appareil chauffant peut également être un appareil ou réservoir chauffant industriel.

Les différents dispositifs de régulation couramment utilisés dans l'industrie mettent en oeuvre une régulation proportionnelle, proportionnelle dérivée, proportionnelle intégrale, dérivée et auto-adaptive ne portant que sur une frange de températures proche de la température maximale ou température de consigne. Ainsi, la montée de la température, depuis la température ambiante jusqu'à la température maximale et le maintien à cette température sont réalisés selon des régimes définis à l'avance. Ainsi, dans le cas d'un récipient de cuisson tel qu'une friteuse électrique, le chauffage est effectué en alimentant les résistances chauffantes à pleine puissance. Il n'est donc pas tenu compte de la charge thermique du récipient, à savoir si celui-ci contient une grande quantité de liquide ou une faible quantité ou soit vide.

On connaît selon le CH-A-444 417, un procédé de régulation d'un appareil chauffant consistant à laisser monter la température jusqu'à une valeur inférieure à une température maximale prédéterminée puis après arrêt du chauffage, à laisser la température monter par inertie thermique jusqu'à ce que la température maximale précitée soit atteinte, l'écart entre la température maximale et la température d'arrêt du chauffage étant déterminé en fonction du profil de la courbe de montée en température du récipient lors de la période de chauffage.

Dans ce procédé, on commande le temps de fonctionnement de la source de chaleur. Cependant, dans la pratique, il est extrêmement difficile de prédéterminer ce temps de fonctionnement. Ainsi, il n'est pas possible d'éviter dans certains cas un dépassement de la température maximale prédéterminée.

Le but de la présente invention est d'atteindre cet objectif en fournissant un procédé de régulation thermique d'un appareil chauffant qui permette d'obtenir la température maximale de chauffage sans risque de dépassement de celle-ci quelle que soit la charge thermique de cet appareil et dans un temps de chauffage minimum.

L'invention vise ainsi un procédé de régulation thermique d'un appareil chauffant, dans lequel on laisse monter la température jusqu'à une valeur inférieure à une température maximale prédéterminée, puis après arrêt du chauffage, on laisse la température monter par inertie thermique jusqu'à ce que la température maximale précitée soit sensiblement atteinte, l'écart entre cette température maximale et la température d'arrêt du chauffage étant déterminé en fonction du profil de la courbe de montée en température lors de la période de chauffage.

Suivant l'invention, ce procédé est caractérisé en ce qu'on calcule en fonction du temps et de la température mesurée, la pente de ladite courbe et on détermine à partir de cette pente la valeur dudit écart.

Ainsi, en calculant l'écart entre la température d'arrêt du chauffage et la température maximale, en fonction du profil de la courbe de montée en température, il est possible d'arrêter le chauffage à une température donnée inférieure à la température maximale quelle que soit la charge thermique de l'appareil. Après l'arrêt du chauffage, la montée en température se poursuit par inertie thermique jusqu'à la température maximale. Autrement dit, en analysant la courbe de montée en température, le procédé selon l'invention permet de prédéterminer la façon dont évoluera la courbe de montée en température par inertie thermique après arrêt du chauffage.

Selon une version avantageuse de l'invention, on détermine l'écart précité en fonction de la pente de la courbe de montée en température et on arrête le chauffage lorsque la température mesurée est légèrement inférieure à la température maximale prédéterminée moins l'écart précité.

La détermination de cette pente permet ainsi de prévoir l'écart, c'est-à-dire la façon dont évoluera la courbe de montée en température entre la température d'arrêt du chauffage et la température maximale que l'on veut atteindre.

Selon une version préférée de l'invention, lors de la montée en température, on mesure la température à intervalles réguliers et on calcule la pente moyenne.

A cet effet, on calcule en permanence l'écart précité en fonction de la pente moyenne.

L'écart calculé est une fonction de la pente de la courbe de montée en température. Cette fonction est déterminée expérimentalement.

De préférence, pour calculer l'écart, on ne prend en considération que la pente moyenne.

Selon une version avantageuse du procédé selon l'invention, après l'arrêt du chauffage, on continue à déterminer à intervalles réguliers la température, la pente et l'écart et on remet en route le chauffage lorsque la température mesurée plus l'écart est inférieure d'environ 1°C à la température maximale prédéterminée.

Ainsi, on ne risque pas de dépasser la température maximale et ce, quelle que soit la charge thermique de l'appareil.

Le chauffage est remis en route pendant une durée calculée selon la relation :

$$\frac{TM - (TC + E)}{Ptc} \cdot K$$

où TM est la température maximale prédéterminée

TC, la température de coupure du chauffage

E, l'écart calculé,

$Pt_c$ la pente à la coupure du chauffage, et

K est un coefficient compris entre 0,5 et 1, qui a été mémorisé après la première coupure.

Ainsi, la température maximale est maintenue d'une manière très précise. Après expiration de la durée de chauffage précitée, le chauffage est coupé pendant une durée fixe, par exemple une quinzaine de secondes.

L'invention vise également le dispositif pour la mise en oeuvre du procédé de régulation thermique précité. Ce dispositif comprend des moyens de chauffage électrique, un capteur pour mesurer la température et des moyens pour couper l'alimentation électrique.

Suivant l'invention, ce dispositif comprend un microprocesseur programmé pour relever à intervalles réguliers la température mesurée par le capteur, pour calculer la pente et moyenne de la courbe de montée en température, pour calculer en fonction de cette pente l'écart entre la température maximale et la température d'arrêt du chauffage et pour commander l'arrêt du chauffage lorsque la température mesurée est légèrement inférieure à la température maximale moins l'écart précité.

Ce microprocesseur effectue ainsi tous les calculs et toutes les mesures définis dans le procédé précité.

L'invention vise également un appareil chauffant comprenant le dispositif de régulation thermique précité.

Cet appareil chauffant est constitué de préférence mais non limitativement par un récipient culinaire à chauffage électrique.

Selon une version préférée de l'invention, ce récipient culinaire comprend plusieurs fonctions de chauffage présentant des températures maximales différentes, des moyens pour sélectionner ces fonctions, le microprocesseur étant adapté pour commander la régulation thermique du chauffage pour chacune de ces fonctions.

Ainsi, il suffit de sélectionner l'une de ces fonctions et le microprocesseur commandera automatiquement la régulation thermique adaptée à cette fonction, ce qui implique que la température maximale correspondant à cette fonction ne sera pas dépassée et sera maintenue à cette valeur pendant la durée désirée.

En particulier, le récipient culinaire peut comporter les fonctions de chauffage suivantes :
- Bain-marie avec une température maximale d'environ 65°C et à puissance de chauffage réduite
- Réchauffer avec une température maximale d'environ 85°C
- Mijoter avec une température maximale d'environ 95°C
- Bouillir avec une température maximale d'environ 100°C
- Frire avec une température maximale d'environ 170°C.

D'autres particularités et avantages de l'invention apparaîtront encore dans la description ci-après.

Aux dessins annexés donnés à titre d'exemples non limitatifs :
- la figure 1 est une vue en coupe d'un récipient culinaire comportant un dispositif de régulation thermique conforme à l'invention,
- la figure 2 est un diagramme montrant l'évolution de la température de la résistance chauffante et du récipient en fonction du temps,
- la figure 3 est un diagramme montrant l'évolution de la température du récipient ainsi que celle de la tension d'alimentation de la résistance de chauffage en fonction du temps,
- la figure 4 est un organigramme général du fonctionnement du dispositif,
- la figure 5 est un schéma du tableau de commande du récipient.

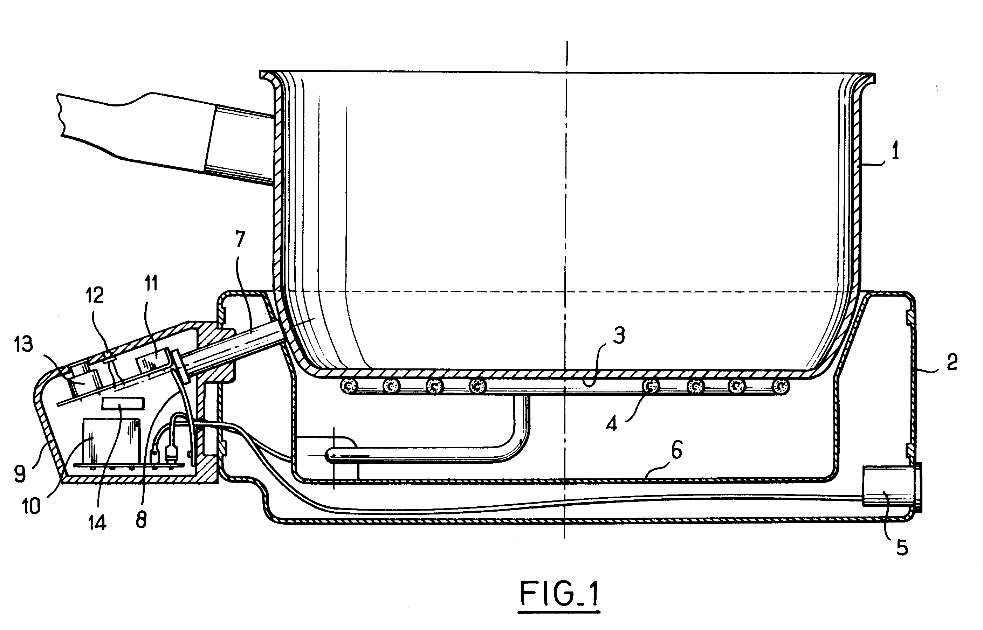

Dans la réalisation de la figure 1, on a représenté un récipient culinaire 1 destiné à contenir un aliment liquide ou solide à chauffer, qui repose de façon amovible sur un socle chauffant 2. Le fond 3 du récipient 1 est en contact avec une résistance de chauffage électrique 4 alimentée en courant électrique à partir d'un connecteur 5.

La paroi intérieure 6 du socle 2 adjacente au fond 3 du récipient forme réflecteur.

Sur le côté du socle 2 est disposé un capteur de température 7 en appui contre la paroi du récipient 1 sous l'action d'un ressort 8. L'arrière du capteur 7 est logé dans un boîtier 9 qui renferme divers composants électroniques et en particulier un relais de puissance 10, un minirupteur 11 détectant la présence du récipient 1, des voyants de fonction 12 et des touches 13.

Le boîtier 9 renferme également un microprocesseur 14 du type 4 bits par exemple COP 422, programmé pour assurer les diverses fonctions qui seront décrites plus loin.

3

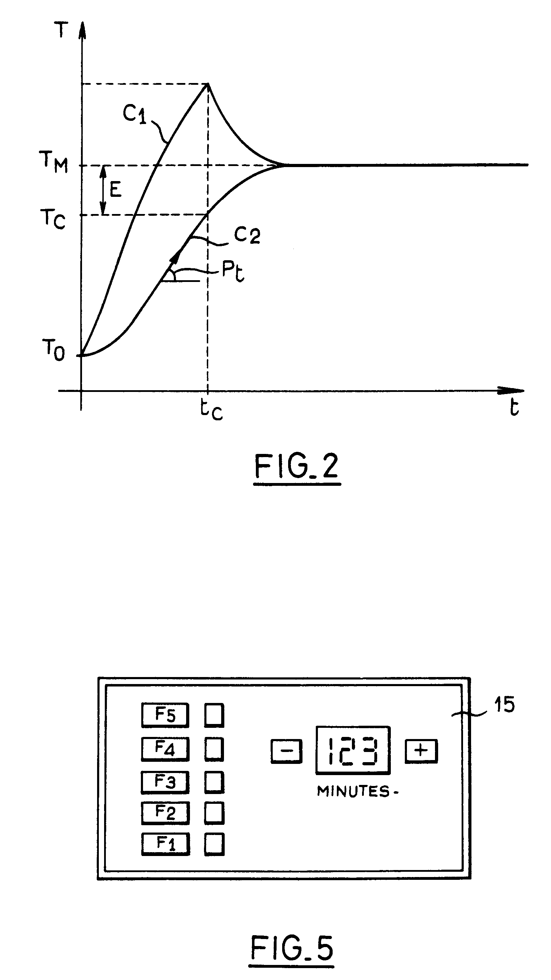

La figure 2 montre l'évolution de la température T en fonction du temps t de l'élément chauffant 4 (courbe $C_1$) et de la paroi du récipient 1 (courbe $C_2$). Compte tenu des inerties thermiques la température de l'élément chauffant 4 monte plus rapidement que celle du récipient 1.

A l'instant $T_C$ de la coupure du courant électrique d'alimentation de l'élément chauffant 4, la température de celui-ci chute rapidement, tandis que celle du récipient 1 continue de progresser à partir de la température $T_C$ de coupure. La température de l'élément chauffant 4 et la température du récipient 1 tendent vers une valeur égale $T_M$.

Si $T_M$ est la température maximale ou de consigne que l'on désire atteindre dans le récipient 1, on voit qu'il faut arrêter le chauffage de l'élément chauffant 4 lorsque la température du récipient 1 atteint la valeur $T_C$. Il convient donc de prédéterminer l'écart E compris entre les températures $T_M$ et $T_C$.

Les essais et les calculs ont montré que l'écart E est d'autant plus grand que la vitesse de montée en température du récipient 1 est rapide. La valeur de l'écart E est une fonction de la pente $P_t$ de la courbe $C_2$ de montée en température du récipient 1.

En effet, à la température $T_C$ de coupure du chauffage, l'équation d'équilibre thermique s'écrit :

$$I_R (\Delta T - E) = I_C . E$$

où $I_R$ = inertie de la résistance
$I_C$ = inertie du récipient
soit :

$$E = \Delta t. \frac{I_R}{I_R + I_C}$$

La condition de transfert thermique s'écrit :

$$P = K.S. \Delta T.$$

où

P est la puissance de chauffage,
S la surface d'échange thermique et
K est une constante.
L'équation du bilan thermique s'écrit :

$$P = P_t.(I_R + I_C)$$

d'où

$$E = \frac{I_R}{K.S} \cdot Pt$$

$I_R$, K et S étant des constantes, l'écart E est bien proportionnel à la pente de la courbe $C_2$ de montée en température du récipient 1. Cette loi linéaire est valable en première approche. Toutefois, pour calculer E avec plus de précision, il est préférable d'utiliser une loi parabolique.

Conformément à l'invention, le microprocesseur 14 calcule en fonction du temps et de la température mesurée par le capteur 7, la pente $P_t$ de la courbe $C_2$ et détermine à partir de cette pente la valeur de l'écart E.

Le microprocessuer 14 commande l'arrêt du chauffage, c'est-à-dire la coupure de l'alimentation électrique de la résistance 4 lorsque la température mesurée par le capteur 7 est légèrement inférieure à la température maximale $T_M$ prédéterminée moins l'écart E. Suivant l'invention, il est en effet préférable de couper le chauffage à une température légèrement inférieure à celle théoriquement nécessaire pour éviter tout risque de dépassement de la température $T_M$.

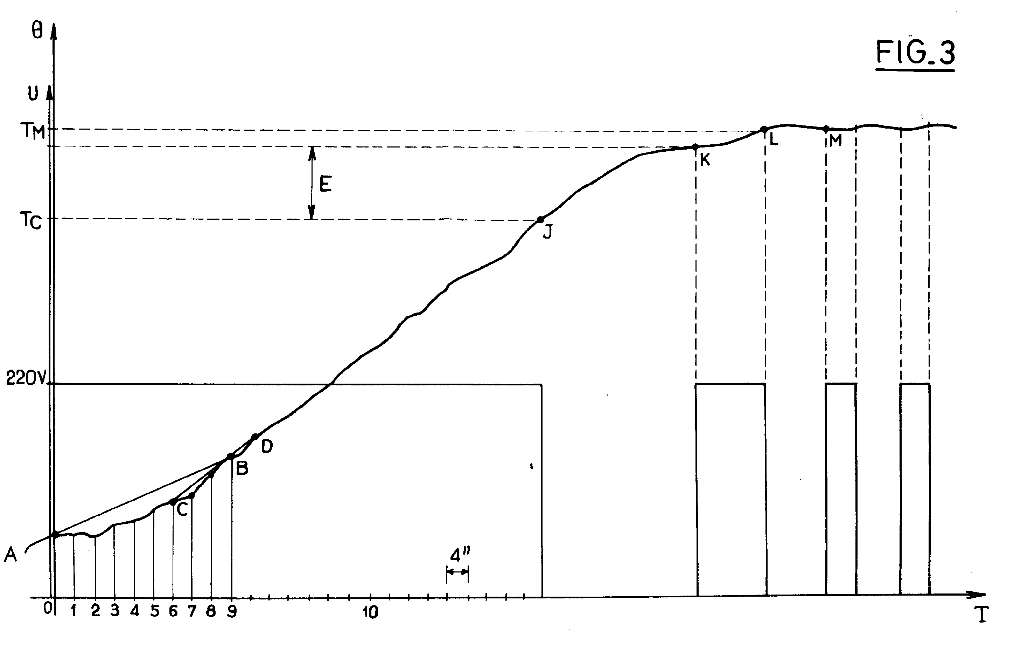

De préférence, après stabilisation de la température mesurée par le capteur 7, le dispositif selon l'invention mesure la température du récipient régulièrement toutes les quatre secondes (voir figure 3).

La température mesurée par le capteur 7 est corrigée selon une relation du type A + B $P_t$, dans laquelle $P_t$ est la pente moyenne calculée au moment de la mesure, A est un coefficient de correction tenant compte du frein thermique capteur/paroi du récipient 1 et B est un coefficient de correction tenant compte de l'inertie du système.

Durant le début du chauffage, la courbe de montée en température est incurvée et souvent irrégulière. Pour compenser cet état de fait, la pente $P_t$ et l'écart E sont calculés pour les instants O - 1 puis 2 - 0, ensuite 3 - 0 et ainsi de suite jusqu'à 9 - 0. La moyenne est alors représentée par la droite AB (voir figure 3). Pour ne pas être influencée par les premières mesures, la moyenne suivante est calculée sur les instants 10 - 6, soit la droite CD, puis sur les instant 11 - 6 ; 12 - 6 ; 13 - 6 et ainsi de suite.

Chaque mesure de température est suivie du calcul de la pente Pt et du calcul de l'écart E selon la formule

$$K_1 P_t + K_2 P_t{}^2.$$

Dans cette formule, et pour le type de récipient chauffant précédemment décrit, $K_1$ et $K_2$ sont les coefficients de la fonction parabolique. Pour être certain que la température de consigne $T_M$ ne soit pas dépassée, le calcul de l'écart E est légèrement majoré. La comparaison s'établit de la manière suivante : dès que la température courante corrigée du capteur TC + E est supérieure à la température de consigne $T_M$, la coupure de l'alimentation de l'élément chauffant 4 a lieu. Au moment de la coupure du chauffage (point J sur le diagramme) la pente à la coupure PtC est conservée en mémoire. Compte tenu des précautions prises (correction de la lecture du capteur + majoration de la pente), la température de consigne $T_M$ ne sera probablement pas atteinte. Une ou plusieurs remises en chauffe seront nécessaires. Ces remises en chauffe sont faites avec les paramètres gardés en mémoire au moment de la première coupure. On va maintenant expliquer comment la température est maintenue après la première coupure de l'alimentation électrique.

Les mesures de température continuent à être effectuées toutes les 4 secondes ainsi que la pente et l'écart E à être calculés. Dans cette phase de maintien, la pente est calculée avec les 10 dernières températures selon la relation $\Theta(TC) - \Theta(TC - 10)/9x4$. L'écart E lui-même est toujours calculé de la même manière (voir ci-dessus). Lorsque la température courante corrigée du capteur TC + l'écart E est inférieur de 1°C à la température de consigne TM une certaine quantité de courant est envoyée dans l'élément chauffant 4.

La durée de chauffage (entre les points K et L de la figure 3) est calculée selon la relation :

$$\frac{TM - (TC + E)}{Ptc} \cdot K$$

où TM est la température maximale de consigne prédéterinée,

TC est la température de coupure du chauffage,

E est l'écart calculé,

Ptc la pente à la coupure du chauffage,

K est un coefficient compris entre 0,5 et 1 et généralement égal à 0,8.

Après expiration de la durée de chauffage précitée, le chauffage est coupé pendant une durée fixe égale à 15 secondes (temporisation entre les points L et M de la figure 3).

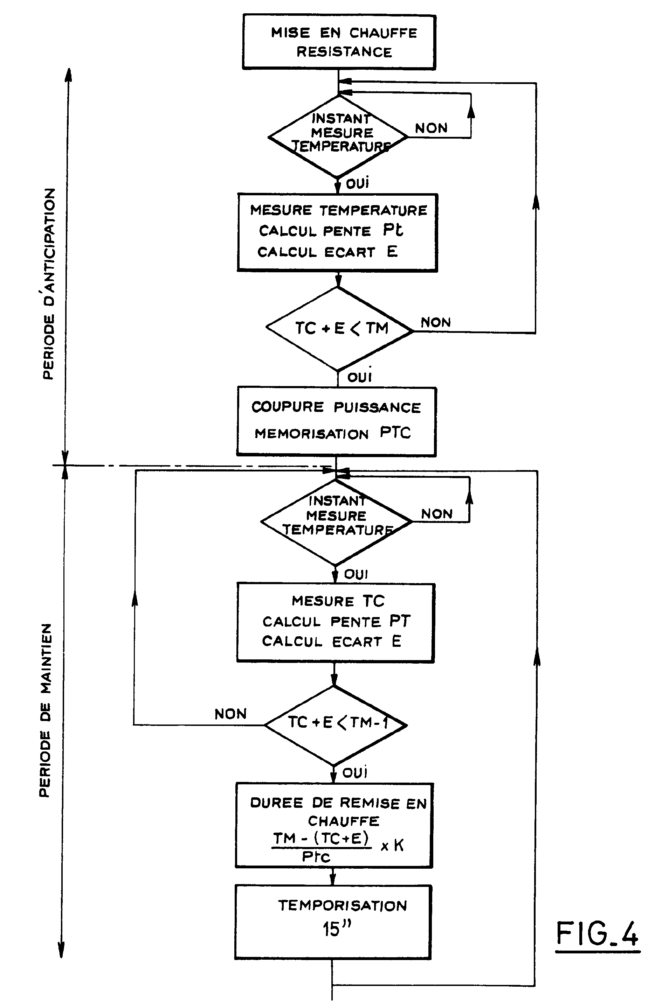

Cette phase de maintien de la température près de la valeur TM est illustrée par l'organigramme de la figure 4.

Le récipient chauffant culinaire représenté sur la figure 1 comprend plusieurs fonctions $F_1$, $F_2$, $F_3$, $F_4$, $F_5$ de chauffage présentant des températures maximales différentes, des moyens pour sélectionner ces fonctions, le microprocesseur (14) étant adapté pour commander la régulation thermique du chauffage pour chacune de ces fonctions.

Dans l'exemple représenté, ce récipient chauffant comprend les fonctions suivantes :

- Bain-marie avec une température maximale d'environ 65°C et à puissance réduite
- Réchauffer avec une température maximale d'environ 85°C
- Mijoter avec une température maximale d'environ 95°C
- Bouillir avec une température maximale d'environ 100°C
- Frire avec une température maximale d'environ 170°C.

A cet effet, le tableau de commande 15 (voir figure 5) du récipient chauffant comprend cinq touches $F_1$, $F_2$, $F_3$, $F_4$, $F_5$ destinées à être actionnées par l'utilisateur et permettant de sélectionner les différentes fonctions de chauffage précitées.

Le tableau de commande 15 comporte également deux touches - et + pour programmer les temps de fonctionnement dans les différentes fonctions de chauffage.

On va maintenant détailler chacune de ces fonctions de chauffage.


FONCTION BOUILLIR


Pour monter un liquide à la température d'ébullition, il faut apporter les calories nécessaires à son élévation de température (chaleur spécifique), compenser les pertes thermiques du moyen de chauffage (rayonnement et conduction de l'élément chauffant) et compenser les pertes thermiques du récipient. La pratique montre que le total des pertes thermiques est sensiblement constant quelle que soit la quantité de liquide contenu dans le récipient.

Pour maintenir un liquide en ébullition, il suffit de compenser les pertes thermiques du système et d'apporter les calories nécessaires à une évaporation minimum. S'il y a excès de calories, le bouillonnement est tumultueux et l'évaporation importante.

Pour la fonction bouillir (quelle que soit la nature du liquide : eau, potage, lait, cuisson de pâtes ou de riz ...et sa quantité) la température de consigne virtuelle TM est de 97°C. L'écart E sera calculé pour atteindre cette température. Mais dès que la température TC = 90°C est atteinte, l'alimentation de l'élément chauffant 4 se fait à 10% de sa puissance nominale (3 secondes sous tension sur une base de temps de 30 secondes).

Deux cas peuvent alors se présenter :

a) un couvercle coiffe le récipient : la courbe de température s'incurve légèrement. La courbe de température vient sensiblement tangenter la température virtuelle de 97°C et s'autostabilise à une température d'environ 100°C selon le type de liquide (eau, eau salée, lait, etc.). L'alimentation du palier d'évaporation du liquide continue à 10% de la puissance nominale (3″ sous tension sur une base de temps de 30″) ;
b) il n'y a pas de couvercle : la courbe de température s'incurve franchement et chute car les pertes sont grandes ; la température dont l'écart permettrait d'atteindre 97°C n'est pas atteint. La pente devient négative, l'alimentation est reprise à une valeur de 50% de la puissance nominale, ce qui permet au liquide d'atteindre son palier d'ébullition.

FONCTION TIEDIR (OU BAIN-MARIE)

Le besoin en énergie, en fonction "bain-marie" est :
- une montée lente en température,
- une régulation à 65°C (température maximale de consigne TM).
Pour ce faire, la puissance apportée à la résistance 4 est le sixième de sa puissance nominale (5″ sous tension sur une base de temps de 30″).
Si le récipient contient une certaine quantité de liquide, la température après une minute de chauffe, aura atteint une valeur de 5°C (dite valeur critique). Si cette température critique est dépassée, cela prouve que la transmission thermique "résistance 4 + fond du récipient + produit à chauffer + paroi du récipient + capteur" se fait bien : il s'agit probablement d'une petite quantité de liquide (une sauce par exemple). Le régime au sixième de la puissance nominale est maintenu.
Si la température n'est pas atteinte, il s'agit probablement d'une grande quantité de liquide (un potage à tiédir par exemple). Le régime de chauffe passe alors à sa puissance nominale.
Dans les deux cas la température de consigne TM est de 65°C.

SECURITE EN FONCTION FRIRE

Faire frire un aliment suppose que la préparation culinaire soit très peu aqueuse, et que le récipient puisse atteindre la température de 170°C (cuisson de viande, de fritures, confection de caramel, etc).
Il peut cependant arriver que l'on programme par inadvertance la fonction frire pour un liquide à point d'ébullition voisin de 100°C.
Après une minute de chauffe, s'il s'agit d'une cuisson à sec (viande grillée ou sautée, caramel ...), la température doit avoir dépassé une température critique de 20°C. Si ce n'est pas le cas, le régime de chauffe passe automatiquement en fonction "Mijotage" (température maximum 95°C).

SECURITE A L'EVAPORATION (DISPARITION DE LA CHARGE)

Lors de l'utilisation de la fonction "Bouillir", l'évaporation complète du liquide en ébullition provoque une élévation de température du récipient.
Lorsque la température dépasse 110°C, l'alimentation de l'élément chauffant 4 est coupée.

STABILISATION DU CAPTEUR DE TEMPERATURE

Un récipient chaud peut être placé sur la résistance de chauffage 4 ; inversement, le capteur 7, chauffé par le rayonnement émis par la résistance, peut être appliqué sur un récipient froid. Dans tous les cas d'utilisation, les températures du capteur et du récipient ne sont pas identiques.
La première phase de régulation thermique consiste à calculer les pentes successives et de ne mettre la résistance sous tension que si la pente instantanée moyennée selon le processus décrit précédemment est inférieure à une certaine valeur telle que 0,1 par exemple.
Les différentes fonctions de chauffage du récipient chauffant conforme à l'invention sont ainsi entièrement pilotées par le microprocesseur. L'utilisateur n'a à sélectionner que l'une des fonctions ainsi que la durée de fonctionnement.
Dans tous les cas, la température maximale ne risque pas d'être dépassée quelle que soit la quantité de produit à chauffer à l'intérieur du récipient.
En complément de ce qui précède, le procédé que l'on vient de décrire peut également être adapté pour diagnostiquer que la température de consigne est atteinte.
A cet effet, il s'agit de repérer l'instant où la température de consigne programmée, au moyen de la touche de fonction sélectionnée, sera atteinte. Il s'agit de l'instant à partir duquel le temps de maintien à la température programmée sera décompté.
Deux cas se présentent :

### A) Fonction "bouillir"

Dans ce cas, à partir d'environ 90°C, l'alimentation de la résistance chauffante est cyclée pour obtenir une puissance moyenne de 50 ou 10% environ de la puissance nominale.

Compte tenu de la dispersion sur la mesure de température, la seule connaissance de celle-ci ne permet pas de connaître avec précision l'instant de début d'ébullition.

On se sert de la définition physique d'un palier d'ébullition qui est d'avoir une température parfaitement stabilisée.

On effectue ainsi le double test suivant :
- température minimum atteinte (97°C par exemple)
- pente pratiquement nulle (<0,05°C/s par exemple).

Quand ces deux conditions sont vérifiées, la température de consigne est réputée atteinte, et cet instant est mémorisé pour la gestion du temps.

### B) Autres fonctions

Dans ce cas, la température de consigne est réputée atteinte lorsque la température TC est à moins de quelques degrés de la consigne (à 5°C près par ex.).

exemple :

- Fonction F2 programmée (85°C)
- à 80°C, la consigne sera considérée atteinte, et cet instant sera mémorisé.

La programmation des cycles de cuisson se fait comme indiqué ci-dessous selon qu'il y a ou pas une garde au chaud prévue à la fonction programmée.

### A) Avec garde au chaud

L'instant de consigne atteinte ayant été repéré, la température programmée par la fonction choisie est maintenue pendant un "temps de palier".

Si un temps a été programmé sur une minuterie, la durée de ce palier est égale à ce temps.

Sinon c'est un temps par défaut qui est pris en compte. Ce temps, préprogrammé par la fonction choisie, dépend de celle-ci, par exemple :

| fonction choisie ........ : | F1 | F2 | F3 | F4 | F5 |
|---|---|---|---|---|---|
| temps par défaut en mn .. : | 60 | 61 | 60 | 30 | 15 |

Quand la durée de ce palier de maintien est écoulée, le cycle passe en garde au chaud (qui correspond à la fonction F1) pendant un temps prédéterminé, 90 mn par exemple.

Ce temps de garde au chaud étant écoulé, le cycle de cuisson est terminé.

### B) sans garde au chaud

Le processus et identique au précédent, mais la fin du cycle de cuisson intervient dès que le palier de maintien est fini.

Bien entendu, l'invention n'est pas limitée à l'exemple de réalisation que l'on vient de décrire et on peut apporter à celui-ci de nombreuses modifications sans sortir du cadre de l'invention.

Ainsi, le procédé selon l'invention peut s'appliquer à la régulation thermique de tout dispositif tel que réacteur chimique, radiateur, convecteur, plaque chauffante et analogue.

## Revendications

1. Procédé de régulation thermique d'un appareil chauffant (1), dans lequel on laisse monter la température jusqu'à une valeur inférieure à une température maximale (TM) prédéterminée, puis après arrêt du chauffage, on laisse la température monter par inertie thermique jusqu'à ce que la température maximale (TM) précitée soit sensiblement atteinte, l'écart (E) entre cette température maximale et la température (TC) d'arrêt du chauffage étant déterminé en fonction du profil de la courbe de montée en température lors de la période de chauffage, caractérisé en ce qu'on calcule en fonction du temps et de la température mesurée, la pente de ladite courbe et on détermine à partir de cette pente la valeur de l'écart (E).

2. Procédé conforme à la revendication 1, caractérisé en ce que lors de la montée en température on mesure la température à intervalles réguliers et on calcule la pente moyenne.

3. Procédé conforme à la revendication 2, caractérisé en ce qu'on calcule en permanence l'écart (E) précité en fonction de la pente moyenne.

4. Procédé conforme à la revendication 3, caractérisé en ce que ladite fonction est déterminée expérimentalement.

5. Procédé conforme à l'une des revendications 3 ou 4, caractérisé en ce que pour calculer l'écart (E) on ne prend en considération que la pente moyenne.

6. Procédé conforme à l'une des revendications 2 à 5, caractérisé en ce qu'après l'arrêt du chauffage on continue à déterminer à intervalles réguliers la température,

7. Procédé conforme à la revendication 6, caractérisé en ce que le chauffage est remis en route pendant une durée calculée selon la relation :

$$\frac{TM - (TC + E)}{Ptc} \cdot K$$

où

TM est la température maximale prédéterminée,
TC la température de coupure du chauffage,
E l'écart calculé,
Ptc la pente à la coupure du chauffage, et
K est un coefficient compris entre 0,5 et 1,

qui a été mémorisé après la première coupure.

8. Procédé conforme à la revendication 7, caractérisé en ce qu'après expiration de la durée de chauffage précitée, le chauffage est coupé pendant une durée fixe.

9. Dispositif pour la mise en oeuvre du procédé de régulation thermique conforme à l'une des revendications 1 à 8, comprenant des moyens de chauffage électrique (4), un capteur (7) pour mesurer la température et des moyens pour couper l'alimentation électrique, caractérisé en ce qu'il comprend un microprocesseur (14) programmé pour relever à intervalles réguliers la température mesurée par le capteur (7), pour calculer la pente instantanée et moyenne de la courbe de montée en température, pour calculer en fonction de cette pente l'écart (E) entre la température maximale (TM) et la température (TC) d'arrêt de chauffage et pour commander l'arrêt du chauffage lorsque la température mesurée est légèrement inférieure à la température maximale (TM) moins l'écart (E) précité.

10. Appareil chauffant comprenant un dispositif de régulation thermique conforme à la revendication 9.

11. Appareil chauffant conforme à la revendication 10, caractérisé en ce qu'il est constitué par un récipient culinaire (1) à chauffage électrique.

12. Récipient culinaire conforme à la revendication 11, caractérisé en ce qu'il comprend plusieurs fonctions (F$_1$, F$_2$, F$_3$, F$_4$, F$_5$) de chauffage présentant des températures maximales différentes, des moyens pour sélectionner ces fonctions, le microprocesseur (14) étant adapté pour commander la régulation thermique du chauffage pour chacune de ces fonctions.

13. Récipient culinaire conforme à la revendication 12, caractérisé en ce qu'il comprend les fonctions de chauffage suivantes :
    - Bain-marie avec une température maximale d'environ 65°C et à puissance de chauffage réduite
    - Réchauffer avec une température maximale d'environ 85°C

- Mijoter avec une température maximale d'environ 95°C
- Bouillir avec une température maximale d'environ 100°C
- Frire avec une température maximale d'environ 170°C.

**14.** Récipient culinaire conforme à l'une des revendications 12 ou 13, caractérisé en ce qu'il comprend en outre des moyens pour programmer les temps de fonctionnement.

**15.** Récipient conforme à la revendication 14, caractérisé en ce que les moyens pour sélectionner les différentes fonctions de chauffage et pour programmer les temps de fonctionnement comprennent des touches ($F_1$, $F_2$, $F_3$, $F_4$, $F_5$) destinées à être actionnées par l'utilisateur.

**16.** Récipient conforme à l'une des revendications 13 à 15, caractérisé en ce que pour la fonction "bouillir" des moyens sont prévus pour commander une réduction de la puissance du chauffage lorsqu'une température de l'ordre de 90°C est atteinte.

**17.** Récipient conforme à la revendication 16, caractérisé en ce qu'il comprend des moyens pour commander une augmentation de la puissance de chauffage, lorsque le récipient (1) est dépourvu de couvercle.

**18.** Récipient conforme à l'une des revendications 13 à 15, caractérisé en ce que pour la fonction "bain-marie" des moyens sont prévus pour maintenir la puissance du chauffage à une valeur réduite si une température de consigne est atteinte au bout d'une durée prédéterminée et pour commander une puissance de chauffage plus importante si cette température n'est pas atteinte au bout de cette durée.

**19.** Récipient conforme à l'une des revendications 13 à 15, caractérisé en ce que pour la fonction "frire" des moyens sont prévus pour commander automatiquement la sélection de la fonction "mijotage" lorsqu'une température critique prédéterminée n'est pas atteinte au bout d'une durée prédéterminée.

**20.** Récipient conforme à l'une des revendications 13 à 15, caractérisé en ce que pour la fonction "bouillir" des moyens sont prévus pour commander automatiquement l'arrêt du chauffage lorsque la température mesurée dépasse 110°C.

**21.** Récipient conforme à l'une des revendications 13 à 20, caractérisé en ce que le dispositif de régulation comprend en outre des moyens pour commander la mise en route du chauffage seulement lorsque la pente moyenne calculée est inférieure à 0,1 environ.

## Patentansprüche

**1.** Verfahren zur thermischen Regulierung eines Heizgeräts (1), bei dem man die Temperatur bis zu einem Wert ansteigen läßt, der niedriger als eine vorgegebene Höchsttemperatur (TM) ist, und man dann, nach Abschaltung der Erwärmung, die Temperatur durch Wärmeträgheit so weit ansteigen läßt, bis die vorgenannte Höchsttemperatur (TM) etwa erreicht ist, wobei der Unterschied (E) zwischen dieser Höchsttemperatur und der Abschalttemperatur (TC) der Erwärmung in Abhängigkeit vom Profil der Temperaturanstiegskurve bei der Heizperiode vorgegeben ist, **dadurch gekennzeichnet**, daß man die Neigung der Kurve in Abhängigkeit von der Zeit und der gemessenen Temperatur berechnet und daß man anhand dieser Neigung den Wert des Unterschiede (E) bestimmt.

**2.** Verfahren nach Anspruch 1, **dadurch gekennzeichnet,** daß beim Temperaturanstieg die Temperatur in regelmäßigen Abständen gemessen und die mittlere Neigung berechnet wird.

**3.** Verfahren nach Anspruch 2, **dadurch gekennzeichnet,** daß der vorgenannte Unterschied (E) in Abhangigkeit von der mittleren Neigung ständig berechnet wird.

**4.** Verfahren nach Anspruch 3, **dadurch gekennzeichnet,** daß diese Funktion experimentell bestimmt wird.

**5.** Verfahren nach einem der Ansprüche 3 oder 4, **dadurch gekennzeichnet,** daß für die Berechnung des Unterschiede (E) nur die mittlere Neigung berücksichtigt wird.

**6.** Verfahren nach einem der Ansprüche 2 bis 5, **dadurch gekennzeichnet,** daß nach Abschaltung der Erwärmung weiterhin in regelmäßigen Abständen die Temperatur, die Neigung und der Unterschied (E) be-

EP 0 348 298 B1

stimmt werden.

7. Verfahren nach Anspruch 6, **dadurch gekennzeichnet**, daß die Erwärmung während einer Dauer wieder eingeschaltet wird, die nach folgender Relation berechnet wird:

$$\frac{TM - (TC + E)}{Ptc} \cdot K$$

wobei

TM die vorgegebene Höchsttemperatur ist,
TC die Abschalttemperatur der Erwärmung,
E der berechnete Unterschied,
Ptc die Neigung bei der Abschaltung der Erwärmung, und
K ein zwischen 0,5 und 1 gelegener Koeffizient ist, der nach der ersten Abschaltung gespeichert worden ist.

8. Verfahren nach Anspruch 7, **dadurch gekennzeichnet**, daß nach Ablauf der vorgenannten Heizperiode die Erwärmung während einer festen Dauer abgeschaltet wird.

9. Vorrichtung für die Anwendung des Verfahrens zur thermischen Regulierung nach einem der Ansprüche 1 bis 8, mit elektrischen Heizmitteln (4), einem Fühler (7) zur Temperaturmessund und Mitteln zur Abschaltung der Stromversorgung, **dadurch gekennzeichnet**, daß sie einen Mikroprozessor (14) enthält, der so programmiert ist, daß er in regelmäßigen Abständen die vom Fühler (7) gemessene Temperatur aufnimmt, um die momentane und mittlere Neigung der Temperaturanstiegskurve zu berechnen, um in Abhängigkeit von dieser Neigung den Unterschied (E) zwischen der Höchsttemperatur (TM) und der Abschalttemperatur (TC) der Erwärmung zu berechlon, und um die Abschaltung der Erwärmung anzuordnen, wenn die gemessene Temperatur etwas niedriger als die Höchsttemperatur (TM) abzüglich des vorgenannten Abstands (E) ist.

10. Heizgerät mit einer Vorrichtung zur thermischen Regulierung nach Anspruch 9.

11. Heizgerät nach Anspruch 10, **dadurch gekennzeichnet**, daß es aus einem elektrisch beheizten Kochgefäß (1) besteht.

12. Kochgefäß nach Anspruch 11, **dadurch gekennzeichnet,** daß es mehrere verschiedene Höchsttemperaturen aufweisende Heizfunktionen ($F_1$, $F_2$, $F_3$, $F_4$, $F_5$) und Mittel zur Auswahl dieser Funktionen enthält, wobei der Mikroprozessor (14) dazu angepaßt ist, die thermische Regulierung der Erwärmung für jede dieser Funktionen zu steuern.

13. Kochgefäß nach Anspruch 12, **dadurch gekennzeichnet**, daß es die folgenden Erwärmungsfunktionen umfaßt:
    - Wasserbad mit einer Höchsttemperatur von ungefähr 65°C und mit reduzierter Wärmeleistung,
    - Aufwärmen mit einer Höchsttemperatur von ungefähr 85°C,
    - Fortkochen mit einer Höchsttemperatur von ungefähr 95°C,
    - Kochen mit einer Höchsttemperatur von ungefähr 100°C,
    - Braten mit einer Höchsttemperatur von ungefähr 170°C.

14. Kochgefäß nach einem der Ansprüche 12 oder 13, **dadurch gekennzeichnet**, daß es außerdem Mittel zur Programmierung der Betriebszeiten umfaßt.

15. Geräß nach Anspruch 14, **dadurch gekennzeichnet**, daß die Mittel zur Auswahl der verschiedenen Erwärmungsfunktionen und zur Programmierung der Betriebszeiten Tasten ($F_1$, $F_2$, $F_3$, $F_4$, $F_5$) umfassen, die dazu bestimmt sind, vom Benutzer betätigt zu werden.

16. Gefäß nach einem der Ansprüche 13 bis 15, **dadurch gekennzeichnet,** daß für die Funktion "Kochen" Mittel vergesehen sind, um eine Reduktion der Wärmeleistung anzuordnen, wenn eine Temperatur von ungefähr 90°C erreicht ist.

17. Gefäß nach Anspruch 16, **dadurch gekennzeichnet**, daß es Mittel zur Anordnung einer Erhöhung der Wärmeleistung umfaßt, wenn das Gefäß (1) nicht mit einem Deckel versehen ist.

18. Gefäß nach einem der Ansprüche 13 bis 15, **dadurch gekennzeichnet**, daß für die Funktion "Wasserbad"

10

Mittel vorgesehen sind, um die Wärmeleistung auf einem reduzierten Wert aufrechtzuerhalten, wenn eine Solltemperatur nach Ablauf einer vorgegebenen Dauer erreicht ist, und um eine bedeutendere Wärmeleistung anzuordnen, wenn diese Temperatur nach Ablauf dieser Dauer nicht erreicht ist.

**19.** Gefäß nach einem der Ansprüche 13 bis 15, **dadurch gekennzeichnet**, daß für die Funktion "Braten" Mittel vorgesehen sind, um automatisch die Auswahl der Funktion "Fortkochen" anzuordnen, wenn eine vorgegebene kritische Temperatur nicht nach Ablauf einer vorgegebenen Dauer erreicht ist.

**20.** Gefäß nach einem der Ansprüche 13 bis 15, **dadurch gekennzeichnet**, daß für die Funktion "Kochen" Mittel vorgesehen sind, um automatisch die Abschaltung der Erwärmung anzuordnen, wenn die gemessene Temperatur 110°C übersteigt.

**21.** Gefäß nach einem der Ansprüche 13 bis 20, **dadurch gekennzeichnet**, daß die Regulierungsvorrichtung außerdem Mittel enthält, um die Einschaltung der Erwärmung nur dann anzuordnen, wenn die berechnete mittlere Neigung niedriger als ungefähr 0,1 ist.

## Claims

**1.** A method for the thermal control of a heating apparatus (1), in which method the temperature is allowed to rise a value below a predetermined maximum temperature (TM) whereupon, after stoppage of the heating, the temperature is allowed to rise by thermal inertia until said maximum temperature (TM) is substantially reached, the difference (E) between said maximum temperature and the temperature (TC) at which heating is stopped being determined in dependence on the profile of the temperature rise curve during the heating period, characterised in that the slope of said curve is calculated in dependence on the time and the measured temperature, and the value of the difference (E) is determined from said slope.

**2.** A method according to claim 1, characterised in that during the temperature rise the temperature is measured at regular intervals and the mean slope is calculated.

**3.** A method according to claim 2, characterised in that the said difference (E) is continuously calculated in dependence on the mean slope.

**4.** A method according to claim 3, characterised in that the said function is determined experimentally.

**5.** A method according to claim 3 or 4, characterised in that only the mean slope is taken into account for calculation of the difference (E).

**6.** A method according to any one of claims 2 to 5, characterised in that after heating has been stopped the temperature is still determined at regular intervals.

**7.** A method according to claim 6, characterised in that the heating is restarted for a period of time calculated in accordance with the relation:

$$\frac{TM - (TC + E)}{Ptc} \cdot K$$

where
TM is the predetermined maximum temperature
TC is the temperature at which heating is stopped
E is the calculated difference
Ptc is the slope when heating is stopped and
K is a coefficient between 0.5 and 1 which has been stored in memory after the first stoppage of the heating.

**8.** A method according to claim 7, characterised in that the heating is stopped for a fixed period of time after expiry of the said heating time.

**9.** A device for applying the thermal control method according to any one of claims 1 to 8, comprising electric heating means (4), a sensor (7) for measuring the temperature and means for cutting off the power supply, characterised in that it comprises a microprocessor (14) programmed to plot at regular intervals the temperature measured by the sensor (7), in order to calculate the instantaneous and mean slope of the temperature rise curve, for the purpose of calculating, in dependence on said slope, the difference (E) between the maximum temperature (TM) and the temperature (TC) at which heating is stopped, and controlling the stoppage of the heating when the measured temperature is slightly lower than the maximum temperature (TM) less the said difference (E).

10. Heating apparatus comprising a thermal control device according to claim 9.

11. Heating apparatus according to claim 10, characterised in that it comprises an electrically heated cooking vessel (1).

12. A cooking vessel according to claim 11, characterised in that it comprises a plurality of heating functions ($F_1$, $F_2$, $F_3$, $F_4$, $F_5$) having different maximum temperatures, and means for selecting said functions, the microprocessor (14) being adapted to actuate the thermal control of the heating for each of these functions.

13. A cooking vessel according to claim 12, characterised in that it comprises the following heating functions:
    - A bain-marie with a maximum temperature of about 65°C and a reduced heating power
    - Reheating with a maximum temperature of about 85°C
    - Simmering with a maximum temperature of about 95°C
    - Boiling with a maximum temperature of about 100°C
    - Frying with a maximum temperature of about 170°C.

14. A cooking vessel according to claim 12 or 13, characterised in that it also comprises means for programming the operating times.

15. A vessel according to claim 14, characterised in that the means for selecting the different heating functions and for programming the operating times comprise keys ($F_1$, $F_2$, $F_3$, $F_4$, $F_5$) adapted to be operated by the user.

16. A vessel according to any one of claims 13 to 15, characterised in that for the boiling function means are provided to effect a reduction of the heating power when a temperature of the order of 90°C is reached.

17. A vessel according to claim 16, characterised in that it comprises means for increasing the heating power when the vessel (1) is without a lid.

18. A vessel according to any one of claims 13 to 15, characterised in that for the bain-marie function means are provided to maintain the heating power at a reduced value if a set temperature is reached at the end of a predetermined period of time and to provide a higher heating power if this temperature is not reached at the end of said time.

19. A vessel according to any one of claims 13 to 15, characterised in that for the frying function means are provided for automatically controlling the selection of the simmering function when a predetermined critical temperature is not reached at the end of a predetermined period of time.

20. A vessel according to any one of claims 13 to 15, characterised in that for the boiling function means are provided for automatically effecting stoppage of the heating when the measured temperature exceeds 110°C.

21. A vessel according to any one of claims 13 to 20, characterised in that the control device also comprises means for actuating starting of the heating only when the calculated mean slope is less than about 0.1.

FIG.1

## FIG.2

## FIG.5

FIG.3

FIG.4